# EUROPÄISCHE PATENTSCHRIFT

(11) **EP 4 216 701 B1**
(45) Veröffentlichungstag und Bekanntmachung des Hinweises auf die Patenterteilung: **24.07.2024**
(21) Anmeldenummer: 21782497.8
(22) Anmeldetag: 21.09.2021
(51) Int. Cl.: A01B 5/14

(54) **SCHEIBEN-WENDEPFLUG MIT AUSWECHSELBAR AUSGEBILDETEN PFLUGMODULEN**
REVERSIBLE DISC PLOW WITH PLOW MODULES THAT ARE DESIGNED TO BE REPLACEABLE
CHARRUE À DISQUE RÉVERSIBLE AVEC MODULES DE CHARRUE CONÇUS POUR ÊTRE REMPLAÇABLES

(30) Priorität: 23.09.2020 DE 102020211919
(43) Veröffentlichungstag der Anmeldung: 02.08.2023
(73) Patentinhaber: Huber Soil Solution GmbH, 8435 Wagna (AT)
(72) Erfinder: HUBER, Franz-Ferdinand, 8435 Wagna (AT)
(74) Vertreter: Leske, Thomas
(86) Internationale Anmeldenummer: PCT/EP2021/075847
(87) Internationale Veröffentlichungsnummer: WO 2022/063732

(56) Entgegenhaltungen:
- EP-A1- 0 820 687
- CA-A1- 2 149 113
- FR-A- 1 361 582
- US-A- 4 165 787

## Beschreibung

Die Erfindung betrifft einen Scheiben-Wendepflug mit zumindest einem auswechselbar ausgebildeten Pflugmodul.

Scheiben-Wendepflüge mit auswechselbaren Pflugmodulen sind bekannt. Aus der nicht vorveröffentlichten deutschen Patentanmeldung DE 10 2019 204 256.2 desselben Anmelders sind ein Pflugmodul und eine Pflugvorrichtung mit einem derartigen Pflugmodul bekannt, welches auswechselbar an einem Grundgerüst der Pflugvorrichtung angebracht ist. In der Regel weist eine derartige Pflugvorrichtung mehrere Pflugmodule auf, welche beidseitig vom Grundgerüst angeordnet sind. Derartige Pflugvorrichtungen sind dafür vorgesehen, eine zu pflügende Fläche von einer Seite durch abwechselndes Fahren eines Zuges in einer Richtung und anschließendes Fahren eines neuen Zuges in entgegengesetzter Richtung auf der zu pflügenden Fläche zu bearbeiten, sodass die gesamte zu pflügende Fläche von einer Seite bis zur anderen Seite gepflügt wird, wobei die gepflügte Fläche gleichmäßig gepflügt ist und an keiner Stelle einen Damm oder eine Furche belässt. Dazu muss bei der Pflugvorrichtung eine Seite der Pflugmodule zum Pflügen in das Erdreich gebracht werden, während die am Grundgerüst bzw. Pflugbaum dazu gegenüberliegend angeordneten Pflugmodule, welche um 180° von den pflügenden Pflugmodulen weg nach oben gerichtet sind, welche also beim Pflügen leer mitgezogen werden müssen, beim Pflügen in der Gegenrichtung gewendet werden. Derartige Pflüge werden deshalb als Wendepflüge bezeichnet, und zwar im Gegensatz zu sogenannten Beetpflügen, welche nicht gewendet werden, aber durchaus als einreihige Pflüge ausgebildet sein können.

In EP 0 820 687 A1 ist zwar ein Pflug mit einem scheibenförmigen Element beschrieben, welches mit einer üblichen Pflugschar zusammenwirkt. Um einen Scheiben-Wendepflug handelt es sich gleichwohl nicht. Denn die Pflugschare sind beidseitig eines Pflugbaumes angeordnet und an diesem jeweils beidseitig befestigt. Pflugmodule sind bei diesem bekannten Pflug nicht vorhanden. Beide Pflügelemente, die Pflugschare und das scheibenförmige Element, sind also nicht zu einer fertig montierten Baueinheit zusammengefasst. Außerdem ist der Pflug nicht einreihig ausgebildet. Die scheibenförmigen Elemente sind zwar bezüglich der Pflugschare schwenkbar, eine doppelte Schwenkbarkeit ist jedoch ebenfalls nicht vorhanden. Die beiden Pflügelemente, Pflugschar und scheibenförmiges Element, sind derartig am Pflugbaum hintereinander angeordnet, dass das scheibenförmige Schneidelement hinter dem zweiten Pflügelement, der Pflugschar, läuft.

Bei der in US 4 165 787 A beschriebenen Pflugvorrichtung sind rotierbare Scheiben hintereinander bzw. nebeneinander auf einer durchgehenden Welle angeordnet, wobei an beiden Seiten dieses mit mehreren scheibenförmigen Elementen ausgebildeten Pflügelements nachlaufende Sechstabilisatoren vorgesehen sind. Die scheibenförmigen Elemente sind als einzige Pflügelemente auf einer Welle hintereinander und nebeneinander angeordnet. Pflugmodule, welche zwei unterschiedliche Schneidelemente zusammengefasst haben, sind nicht vorhanden. Prinzipiell handelt es sich bei der bekannten Pflugvorrichtung nicht um einen Scheiben-Wendepflug, auch weil die Scheiben selbst hinsichtlich ihrer Sturz- und Anschnittwinkel nicht einstellbar sind.

Der aus FR 1 361 582 A bekannte Pflug ähnelt dem in US 4 165 787 A beschriebenen. Es gibt zwar scheibenförmige Schneidelemente, welche in einer Reihe hintereinander an einem Pflugbaum angeordnet sind, zweite Schneidelemente, welche mit den ersten scheibenförmigen Schneidelementen gemeinsam ein Pflugmodul bilden, sind dagegen nicht beschrieben. Es sind lediglich scheibenförmige Nachlauf-Stabilisatoren vorgesehen, damit der Pflug beim Ziehen durch die Erde eine gewünschte Zuglinie bei schräg gestelltem Pflug im Wesentlichen einhalten kann. Eine doppelte Verschwenkbarkeit um eine Anschlusseinheit und um einen Pflugmodulträger kennt dieser Stand der Technik nicht.

Aus CA 2 149 113 A1 ist ein Pflug bekannt, welcher zwar scheibenförmige Elemente zum Pflügen aufweist, welche längs eines zwingend erforderlichen Pflugbaumes angeordnet und Gestänge mit diesem verbunden sind. Als zweites Schneidelement bzw. Pflügelement ist jedoch ein pflugscharähnliches gekrümmtes Schneidblech vorhanden. Dieses Schneidblech hat die Form eines Schneepfluges, so dass es zu einem hohen Zugwiderstand führt, wenn dieses zweite Element in den Boden eingeführt ist. Beide Schneidelemente sind jedoch nicht zu einer Baueinheit vereinigt, sondern jeweils separat an dem Pflugbaum befestigt. Des Weiteren sind die Schneidelemente so angeordnet, dass das zweite Schneidelement in Pflügrichtung vor dem ersten angeordnet ist. Nachteilig bei diesem Pflug ist, dass ein relativ hoher Zugwiderstand durch das zweite Schneidelement erzeugt wird, welcher sogar noch größer ist als bei Vorsehen eines pflugscharähnlichen zweiten Schneidelementes. Denn das in CA 2 149 113 A1 beschriebene zweite Schneidelement, welches dort als Scimmer bzw. Scraper bezeichnet ist, ist mehr ein Element, das sich durch den Boden schabt, als dass es zugwiderstandsvermindernd den Boden an der Furchensohle abtrennt und dem gekrümmten ersten Schneidelement zum Wenden des Erdbalkens zuführt.

Unter einreihigen Pflügen soll hier ein solcher Aufbau von Pflügen verstanden werden, bei welchem Pflugmodule nur auf einer Seite eines Pflugbaumes, Pfluggerüstes bzw. eines Modulträgers angeordnet sind.

Unter Wendepflug soll im Rahmen dieser Anmeldung verstanden werden, dass zum Zwecke des Wechsels der Pflügrichtung der Pflug gewendet werden muss.

Bei der Pflugvorrichtung gemäß dem zugrundeliegenden nächstliegenden Stand der Technik handelt es sich wie bei der vorliegenden Erfindung um einen Scheiben-Wendepflug, allerdings um einen doppelreihigen Pflug. Das bedeutet, dass die Pflugmodule ein rotierbares, als Schneidteller ausgebildetes erstes Schneidelement aufweisen. Dieses erste Schneidelement ist dafür vorgesehen, beim Bewegen des Pflugmoduls durch zu pflügenden Boden entlang einer ersten Pflügrichtung und entlang einer dazu entgegengesetzten zweiten Pflügrichtung einen Seitenbereich eines Erdbalkens des Bodens zu schneiden. Des Weiteren ist ein zweites, dem ersten Schneidbereich nachlaufendes Schneidelement vorgesehen, mittels welchem beim Bewegen des Pflugmoduls entlang der Pflügrichtungen ein Bodenbereich des Erdbalkens abschneidbar ist. Einreihige Scheibenpflüge sind für Beetpflüge bekannt, Wendepflüge weisen in der Regel jedoch beidseitig eines zentralen Trägerelementes mehrere Pflugmodule auf, von denen beim Pflügen immer nur eine Reihe im Einsatz ist.

Der Nachteil derartiger Wendepflüge besteht darin, dass ein relativ hoher Materialeinsatz für die in der Regel vorgesehene Vielzahl von Pflugmodulen am eigentlichen Pflug vorhanden ist, wobei immer nur die Hälfte der vorhandenen Pflugmodule beim Pflügen genutzt werden können, die nicht genutzten Pflugmodule dagegen ungenutzt beim Pflügen mittransportiert werden müssen. Das führt zu einem höheren Gewicht des Pfluges und damit zu einer höheren erforderlichen Zugleistung und damit auch zu einem höheren Kraftstoffverbrauch des Antriebsfahrzeuges für den Pflug. Aus ökologischen Aspekten ist ein Wendepflug, obwohl er zum gleichmäßigen Pflügen sehr gut geeignet ist, daher nachteilig.

Der Einsatz eines einreihigen Wendepfluges hat per se das inhärente Problem, dass nach erfolgtem Wenden der einen Reihe von Pflugmodulen für eine entgegengesetzt zur gerade ausgeführten Pflügfurche für die dazu rückwärtig gerichtete Pflügrichtung Sturz und Anschnitt des ersten, als Schneidteller ausgebildeten Schneidelementes nicht stimmen, sodass ein Pflügen nicht ohne weiteres möglich wäre. Ein solcher einreihiger Pflug, selbst als Scheibenpflug, wäre daher nur als Beetpflug nutzbar.

Für den im nächstliegenden Stand der Technik beschriebenen Wendepflug ist bereits versucht worden, eine Einstellbarkeit für optimale Pflügbedingungen an unterschiedliche Bodenqualitäten vorzusehen, indem bei jedem Pflugmodul eine individuelle, sogar stufenlos erfolgende Einstellung des Sturzes und des Angriffswinkels angedacht worden ist. Dies verkompliziert jedoch nicht nur den Aufbau eines derartigen Pfluges, zusätzliche weitere Teile erhöhen das Risiko eines Ausfalls.

Es ist daher die Aufgabe der vorliegenden Erfindung, einen Scheiben-Wendepflug bereitzustellen, welcher die ökonomischen und ökologischen Nachteile von zweireihigen Scheiben-Wendepflügen vermeidet und bei welchem ein individuelle Einstellung des Sturzes und des Angriffswinkels des ersten, als Schneidteller ausgebildeten Schneidelementes mittels zusätzlicher Einstellmechanismen zu vermeiden, und zwar ohne dass die Zugkraftbedingungen beim Pflügen richtungsabhängig unterschiedlich sind bzw. gegenüber einer in eine Richtung optimierten Winkelstellung bei einer ersten Pflugrichtung im Vergleich mit der entgegengesetzt dazu erfolgenden zweiten Pflügrichtung verschlechtert sind.

Diese Aufgabe wird mittels eines Scheiben-Wendepfluges mit den Merkmalen gemäß Anspruch 1 gelöst. Zweckmäßige Weiterbildungen sind in den abhängigen Ansprüchen definiert.

Erfindungsgemäß weist der Scheiben-Wendepflug zumindest ein als fertigmontierte Baueinheit auswechselbar ausgebildetes Pflugmodul auf, welches mit einem Pflugmodulträger verbunden ist. Zweckmäßigerweise bzw. vorzugsweise weist der erfindungsgemäße Scheiben-Wendepflug mehrere an den Pflugmodulträger hintereinander angeordnete Pflugmodule auf. Die an sich bekannte Pflugmodultechnik weist den Vorteil auf, dass gegebenenfalls beschädigte Pflugmodule mit relativ wenigen Handgriffen austauschbar angeordnet sind und somit durch reparierte oder neue Pflugmodule jeweils ersetzbar sind, sodass sich die Reparaturzeit eines erfindungsgemäßen Scheiben-Wendepfluges reduziert, zumal derartige Reparaturen sogar unmittelbar vor Ort auf der zu pflügenden Fläche ausgeführt werden können. Die Pflugmodule weisen jeweils ein rotierbares, als Schneidteller ausgebildetes erstes Schneidelement und ein zweites, dem ersten Schneidelement nachlaufendes Schneidelement auf. Mit Hilfe des ersten Schneidelementes wird beim Bewegen des Pflugmoduls durch zu pflügenden Boden entlang einer ersten Pflügrichtung und entlang einer dazu entgegengesetzten zweiten Pflügrichtung ein Seitenbereich des Erdbalkens des Bodens geschnitten. Mit Hilfe des zweiten Schneidelementes wird beim Bewegen des Pflugmoduls entlang der Pflügrichtungen ein Bodenbereich des Erdbalkens abgeschnitten. Das erste Schneidelement ist nun so ausgebildet, dass es nicht nur den Seitenbereich des Erdbalkens schneidet, sondern den mit dem zweiten Schneidelement vom Boden getrennten Erdbalken aus der Furche anheben und entsprechend wenden kann.

Der erfindungsgemäße Scheiben-Wendepflug ermöglicht es, aus einem Beetpflug einen Wendepflug zu machen, ohne dass ein großer Aufwand dafür erforderlich wäre. Ein herkömmlicher Wendepflug weist eine spiegelsymmetrische Doppelbestückung von Pflugmodulen beidseitig eines Pflugbaums auf, um die richtige Arbeitsposition, d.h. die Ausrichtung des Pfluges bei der Rückfahrt in die neue Furche, zu erreichen. Zugleich müssen richtige Arbeitsposition, Zuglinie, Neigung zur Furchensohle, Nachlauf, Vorfurchenbreite, Schnittwinkel, Sturzwinkel, etc. für beide Pflügrichtungen, d.h. vor und nach der Wendung, exakt übereinstimmen. Mit einem Wendepflug mit spiegelsymmetrischer Doppelbestückung ist das möglich, da jede, auf einer Seite des Pflugbaumes angeordnete Modulreihe so eingestellt ist, dass die entsprechenden Winkel, bezogen auf die Pflügrichtung, identisch einstellbar sind.

Gemäß der Erfindung wird aber auf die Doppelbestückung verzichtet; überraschenderweise hat sich gezeigt, dass es dennoch möglich ist, einen Scheiben-Wendepflug in einreihiger Ausführung ohne umfangreiche individuelle Einstellung der Schneidelemente eines jeden Pflugmoduls zu erzeugen. Der einseitig ausgebildete Scheiben-Wendepflug weist einen Pflugmodulträger auf, welcher über Zwischenschaltung von einer Schwenkeinheit mit einer Anschlusseinheit zum Anschließen des Scheiben-Wendepflugs an ein Antriebsfahrzeug verbunden ist. Erfindungsgemäß ist die Schwenkeinheit doppeltschwenkend ausgebildet, und zwar derart, dass beim Übergang von einer ersten Pflügrichtung in eine zweite Pflügrichtung, d.h. vom Übergang von einer der beiden Pflügrichtungen auf die andere, der Pflugmodulträger mit dem zumindest einen Pflugmodul von seiner ersten Position, in welcher eine Furche in der ersten Pflügrichtung erzeugt wird, zur gegenüberliegenden zweiten Position, in welcher eine zu der ersten Pflügrichtung entgegengesetzt verlaufende zweite Pflügrichtung gepflügt wird, bezüglich der Anschlusseinheit schwenkbar ist. Das bedeutet, das Pflugmodul oder sämtliche an einem Pflugmodulträger befestigten Pflugmodule wird bzw. werden zunächst sozusagen um die Anschlusseinheit auf die, wie es für einen Wendepflug üblich ist, gegenüberliegende Seite bzw. zweite Position geschwenkt, welche für ein Pflügen in einer entgegengesetzten Richtung zu der zuerst in der zuvor erzeugten Furche gewendet werden muss. Diese Schwenkbewegung erfolgt zunächst in einer Einheit, weil bei diesem Schwenken die Schwenkeinheit fest mit dem Pflugmodulträger und damit den Pflugmodulen verbunden ist. Gleichzeitig weist die Schwenkeinheit im Sinne ihrer doppelten Schwenkbarkeit eine Schwenkmöglichkeit relativ zur Längsachse des Pflugmodulträgers derart auf, dass trotz der Wendung Anschnittwinkel und Sturzwinkel des ersten Schneidelementes in der zweiten Position für die zweite Pflügrichtung identisch zu dem Anschnittwinkel und dem Sturzwinkel sind, wie sie für das Pflügen in der ersten Pflügrichtung eingestellt und angeordnet wurden. Das bedeutet, dass Anschnittwinkel und Sturzwinkel des ersten Schneidelementes in Folge der Schwenkung und damit der spiegelsymmetrischen Anordnung einen solchen Winkel aufweisen, dass nach erfolgter Wendung bei Relativverschwenkung der Schwenkeinrichtung zur Längsachse des Pflugmodulträgers genau diese Anschnittwinkel und Sturzwinkel dann aber auf der gespiegelten anderen Seite wieder erzeugbar sind.

Damit sind keine zusätzlichen Einstelleinrichtungen für den Sturzwinkel und den Anschnittwinkel für das erste Schneidelement erforderlich. Dies stellt einen enormen Vorteil hinsichtlich Einfachheit aber Flexibilität und Einsatzfähigkeit selbst für unterschiedliche Bedingungen beim Pflügen dar.

Vorzugsweise weist die Anschlusseinheit in an sich bekannter Weise eine in Zuglinie verlaufende erste Schwenkachse, um welche der Scheiben-Wendepflug insgesamt verschwenkbar ist, und eine zusätzliche Schwenkachse auf, welche senkrecht zum Boden verläuft und über welche die Anschlusseinheit mit der Schwenkeinheit verbunden ist. Mittels der zusätzlichen Schwenkachse erfolgt eine Einstellung des Winkels zwischen der ersten Schwenkachse und der Längsachse des Pflugmodulträgers und damit eine Breiteneinstellung für die Pflügbreite im Sinne zumindest einer gewissen Ähnlichkeit mit einer sogenannten Variotechnik. Allerdings verändert sich bei Variation der Pflügbreite der Anschnittwinkel, was für unterschiedliche Böden aber sogar sinnvoll ist.

Weiter vorzugsweise ist die Anschlusseinheit mittels eines Parallelogrammgestänges an die Schwenkeinheit angeschlossen. Mittels des Parallelogrammgestänges ist ein zwischen einer Zuglinie des Antriebsfahrzeuges und dem Modulträger ausgebildeter und die Pflügbreite definierender Winkel einstellbar. Ein wesentlicher Unterschied zu herkömmlichen Wendepflügen und auch zu herkömmlichen einreihigen Beetpflügen besteht darin, dass der erfindungsgemäße Pflug keinen Pflugbaum aufweist. Dieser ist sozusagen durch die die zweite Schwenkachse realisierende Schwenkeinheit, d. h. durch den Pflugmodulträger, ersetzt.

Bei einem herkömmlichen Wendepflug mit fest am Pflugbaum befestigten Pflugmodulen ist eine Relativschwenkbewegung zwischen insbesondere dem ersten Schneidelement und der Längsachse des Pflugbaumes nur über eine zusätzliche Einstelleinheit für das erste Schneidelement zu realisieren. Dadurch wird der Gesamtaufbau eines solchen bekannten Pfluges komplizierter als der erfindungsgemäße Pflug, sodass, abgesehen von einer Masseersparnis aufgrund deutlich verringerter Ausfallwahrscheinlichkeit und Nutzung der Pflugmodule sowohl für eine Pflügrichtung im Sinne einer Hinbewegung als auch für eine Pflügrichtung im Sinne einer dazu rückwärts gerichteten Pflügrichtung, der erfindungsgemäße Pflug deutliche Vorteile aufweist.

Bei einem derartigen Pflug wie auch vorzugsweise bei dem erfindungsgemäßen ist vorgesehen, dass eine Nachlaufstabilisierung der die eigentliche Pflügaufgabe erfüllenden Pflugmodule hinsichtlich ihrer Aufhängung angeordnet ist. Bei dem erfindungsgemäßen Scheiben-Wendepflug wird dies vorzugsweise damit gelöst bzw. zumindest unterstützt, dass vorzugsweise vor dem zumindest einen Pflugmodul bzw. vor dem in Pflügrichtung ersten Pflugmodul bei Anordnung von mehreren Pflugmodulen an dem Pflugmodulträger ein Führungssech angeordnet ist. Es ist jedoch auch möglich, dass ein solches Führungssech vor dem letzten Pflugmodul oder auch vor jedem Pflugmodul vorgesehen ist. Vorzugsweise ist das Führungssech bezüglich der Zuglinie, insbesondere hydraulisch winkelverstellbar. Über die Winkelverstellbarkeit, welche selbstverständlich auch mechanisch oder elektromechanisch realisiert werden kann, kann eine gewünschte und eingestellte Pflügbreite zusammen mit einer entsprechenden Parallelogrammeinstellung im Sinne der Variotechnik beibehalten werden, sodass mit einem bezüglich der Zuglinie ausgeschwenkten Führungssech eine einmal eingestellte und gewünschte Pflügbreite beibehalten werden kann. Ein derartiges Führungssech hat also, bezogen auf das Antriebsfahrzeug, eine gewisse Lenkeigenschaft.

Vorzugsweise ist das Führungssech beidseitig konvex ausgebildet, sodass es beim Schneiden des Seitenbereiches des Erdbalkens nicht nur einen einfachen Schnitt erzeugt, sondern schon eine gewisse etwa V-förmig gestaltete Aufweitung des Schlitzes, was für das nachfolgende Pflugmodul ein leichteres Eindringen in das Erdreich zum Schneiden der nächsten Seitenwand des folgenden Erdbalgens ermöglicht.

Zur Realisierung der doppelten Verschwenkbarkeit mittels der Schwenkeinheit ist zum Verschwenken des Pflugmoduls gemeinsam mit dem Pflugmodulträger, welcher konstruktiv keinen Pflugbaum darstellt, aus dessen erster in dessen zweite Position am Pflugmodulträger die Schwenkeinheit unverdrehbar fixiert. Diese Fixierung ist lösbar ausgebildet. Nach erfolgtem Verschwenken des Pflugmoduls aus dessen erster Position in die zweite Position erfolgt ein Gegenverschwenken in dieser zweiten Position, und zwar in die entgegengesetzte Richtung, bei gelöster Fixierung, sodass eine Relativ-Schwenkung der gesamten Pflugmodule gemeinsam mit deren Pflugträger um diese zweite Schwenkachse an der Schwenkeinheit erfolgt. Dabei wir das Gegenschwenken in der zweiten Position bis zum Erreichen von dem Sturzwinkel und dem Anschnittwinkel des ersten Schneidelementes vorgenommen, welchen dieses erste Schneidelement für das Pflügen in der ersten Richtung vor dem Wenden hatte. Nach dem Gegenschwenken wird dann ein Sturzwinkel und Anschnittwinkel des ersten Schneidelementes durch die doppelte Verschwenkbarkeit mittel der Schwenkeinheit erreicht, und zwar ohne dass das Pflugmodul bezüglich seines Pflugmodulträgers verschwenkt werden muss. Die Verschwenkung ist also eine Verschwenkung des Pflugmodulträgers mit all den daran befestigen Pflugmodulen im Raum derart, dass zusammen mit der Schrägstellung des Pflugmodulträgers bezüglich der Zuglinie des Scheiben-Wendepfluges sich die Sturzwinkel und Anschnittwinkel der Pflugmodule relativ zu der entgegengesetzten auf dem zu pflügenden Feld rückwärts gerichteten Pflügrichtung identisch ergeben bzw. erzeugt werden. Eine separate Verstellung des ersten Schneidelementes bezüglich seines Sturzwinkels und Anschnittwinkels bezüglich der Längsachse des Pflugmodulträgers ist daher nicht erforderlich, vor allem auch weil dieser Pflugmodulträger keinen Pflugbaum darstellt.

Vorzugsweise erfolgt das erste Verschwenken des zumindest einen Pflugmoduls beziehungsweise der an dem Pflugmodulträger befestigen mehreren Pflugmodule um die Anschlusseinheit über die Schwenkeinheit in einem Winkelbereich von zweimal ca. 90°, d.h. ca. 180° und das nachfolgende zweite Verschwenken von Schwenkeinheit und Pflugmodulträger relativ zueinander in einem Winkel von vorzugsweise zweimal 44°, d.h. +/- 44°. In der Regel ist dieser Winkelbereich kleiner als 180°. Bei einem herkömmlichen zweireihigen Scheiben-Wendepflug ist diese Schwenkung im Bereich von 180°. Auch aufgrund eines geringeren Schwenkwinkels ist eine Zeiteinsparung beim Wechsel der Pflügrichtung auf dem zu pflügenden Feld vorhanden. Vorzugsweise greifen das erste und das zweite Verschwenken zeitlich ineinander. Sie können aber auch zeitlich parallel ablaufen, so dass mit Verschwenken der Anschlusseinheit gleichzeitig ein Verschwenken der Schwenkeinheit erfolgt.

Ein separates, individuelles Einstellen der Sturzwinkel und der Anschnittwinkel von denen für die Pflügrichtung vor dem Wenden auf diejenigen der Pflügrichtung nach dem Wenden ist nicht erforderlich.

Vorzugsweise ist das zweite Schneidmesser als Unterschneidemesser ausgebildet. Eine Ausbildung als scheibenförmiges zweites Schneidelement ist jedoch auch möglich.

Weitere Vorteile, Anwendungsmöglichkeiten und Details des erfindungsgemäßen Scheiben-Wendepfluges werden nun anhand von Ausführungsbeispielen unter Bezug auf die Zeichnung detailliert erläutert. In der Zeichnung zeigen:
- Figur 1a):: ein erstes Ausführungsbeispiel gemäß der Erfindung für einen einreihigen Scheiben-Wendepflug in dessen erster Arbeitsposition;
- Figur 1b):: den erfindungsgemäßen Scheiben-Wendepflug gemäß Figur 1(a), jedoch in 180° gedrehter, gespiegelter, zweiter Arbeitsposition;
- Figur 2a):: eine Vorderansicht des erfindungsgemäßen Scheiben-Wendepfluges gemäß Figur 1 in Richtung der Zuglinie entgegengesetzt zur Fahrtrichtung in der ersten Arbeitsposition;
- Figur 2b):: eine Ansicht in Richtung der Zuglinie entgegengesetzt zur Zugrichtung in der zweiten Arbeitsposition, wie hier um 180° geschwenkt, gespiegelt zu der ersten Arbeitsposition ist;
- Figur 2c:: den Vorgang des Schwenkens des Pflugmoduls mit dem Pflugmodulträger relativ zu der Anschlusseinheit, mittels welcher sozusagen der Pflugmodulträger 3 zusammen mit dem Pflugmodul von einer Seite der Anschlusseinheit auf deren andere Seite um 180° geschwenkt wird;
- Figur 3a):: eine Darstellung des erfindungsgemäßen einreihigen Scheiben-Wendepfluges in vereinfachter Darstellung in Vorderansicht und in Draufsicht in einer ersten Arbeitsposition;
- Figur 3b):: den einreihigen Scheiben-Wendepflug gemäß Figur 3a) in einer aus der ersten Arbeitsposition um ca. 90° angehobenen Zwischenposition;
- Figur 3c):: den einreihigen Scheiben-Wendepflug gemäß Figur 3a) in einer gegenüber der Zwischenposition gemäß Figur 3b) um weitere 90° geschwenkten weiteren Zwischenposition;
- Figur 3d):: den erfindungsgemäßen Scheiben-Wendepflug gemäß Figur 3a) in einer Position zur ersten Arbeitsposition um 180° gespiegelten zweiten Arbeitsposition, zum Pflügen in einer zur ersten Pflügrichtung entgegengesetzten Pflügrichtung;
- Figur 3e):: den erfindungsgemäßen Scheiben-Wendepflug gemäß Figur 3a) in Transportstellung;
- Figur 4:: in prinzipieller Darstellung ein Pflugmodul, welches mit einem Grindel an einem nicht gezeigten Pflugmodulträger befestigt ist, wobei am zweiten Schneidelement in Form eines Unterschneidemessers eine Nachlaufstabilisierung vorgesehen ist;
- Figur 5:: in prinzipieller Darstellung ein Pflugmodul, welches mit einem Grindel an einem nicht gezeigten Pflugmodulträger befestigt ist und als zweites Schneidelement eine Bodenschneidscheibe aufweist;
- Figur 6:: ein weiteres Ausführungsbeispiel der Erfindung, bei welchem ein Führungssech in Seitenansicht und in Stirnansicht dargestellt ist.

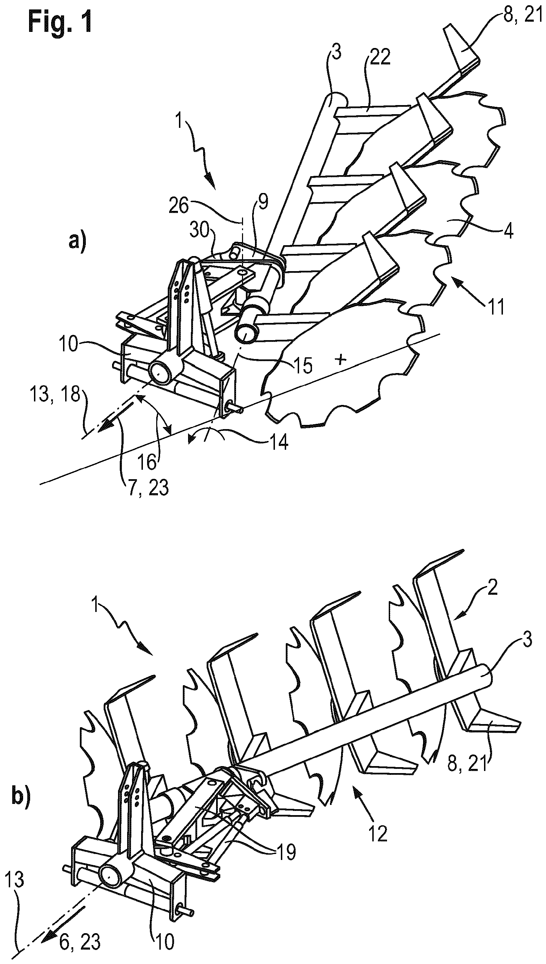

Figur 1 zeigt in Abbildung Figur 1a) einen erfindungsgemäßen einreihigen Scheiben-Wendepflug in seiner ersten Arbeitsposition und in Figur 1b) den erfindungsgemäßen Scheiben-Wendepflug gemäß Figur 1a) in einer zweiten Arbeitsposition. Der erfindungsgemäße Scheiben-Wendepflug ist einreihig ausgebildet, das bedeutet, dass entsprechend dem in Figur 1 gezeigten Ausführungsbeispiel vier Module 4, welche an einem Modulträger 3 mittels einer jeweiligen Grindel 22 befestigt sind und nur einseitig von dem Pflugmodulträger 3 angeordnet sind. Jedes Pflugmodul 2 weist ein erstes, als Schneidteller ausgebildetes Schneidelement 4 und ein als Unterschneidemesser 21 ausgebildetes zweites Schneidelement 8 auf. Das erste Schneidelement 4 ist als gewölbte, bombierte und am Außenumfang gezahnte Scheibe ausgebildet, welche bezüglich der Senkrechten einen Sturzwinkel 17 (nicht eingezeichnet) und bezüglich einer Fahrtrichtung 23, welche mit einer Zuglinie 18 übereinstimmt, eine seitliche Neigung aufweist, welche als Anschnittwinkel 16 (nicht eingezeichnet) bezeichnet wird.

Mit dem ersten Schneidelement 4 wird ein Seitenbereich eines zu wendenden Erdbalkens vom festen Boden geschnitten und mittels der Krümmung des Schneidtellers gewendet und somit nach dem Abtrennen und Wenden mit der Oberseite nach unten in der Furche wieder abgelegt. Der Furchenboden wird mittels des Unterschneidemessers 21 geschnitten, sodass bei der in Figur 1a) und Figur 1b) gezeigten Anordnung das in Pflügrichtung hinter dem ersten Schneidelement angeordnete zweite Schneidelement 8 die Sohle in der Furche schneidet, sodass der Erdbalken im Sohlenbereich abgetrennt wird und mit dem zum zweiten Schneidelement 8 nachgeordneten ersten Schneidelement 4 des zweiten Pflugmoduls 2 die Sohle vom festen Boden abgetrennt wird und der Erdbalken abgetrennt und gewendet werden kann.

Der Pflugmodulträger 3 stellt keinen Pflugbaum dar, er ist vielmehr Teil der eine einzelne Baueinheit darstellenden Pflugmodulgruppe. Der Pflugmodulträger 3 ist mit einer Schwenkeinheit 9 verbunden, welche über ein Parallelogrammgestänge 19 mit einer Anschlusseinheit 10 verbunden ist. Die Schwenkeinheit 9 greift am Pflugmodulträger 3 an und ist dort mittels einer lösbaren Fixierung befestigt. Zwischen der Anschlusseinheit 10, welche mit dem Antriebsfahrzeug zum Zwecke des Pflügens verbunden ist, und der Schwenkeinheit ist das Parallelogrammgestänge 19 angeordnet, welches die Anschlusseinheit 10 mit der Schwenkeinheit 9 verbindet. Mittels des Parallelogrammgestänges 19 wird über eine zusätzliche Schwenkachse 26 der Winkel, welcher zwischen der Längsachse 15 des Pflugmodulträgers 3 und der Zuglinie 18 beziehungsweise der ersten Schwenkachse 13 gebildet wird, und damit auch die Vorderfurchenbreite eingestellt. Durch die Schrägstellung des Pflugmodulträgers 3 mit den Pflugmodulen bezüglich der Zuglinie 18 wird im Sinne eines Variopfluges dessen Pflügbreite eingestellt. Je nach Pflügbreite, d.h. je nach Schrägstellung der Längsachse 15 des Pflugmodulträgers 3, ändert sich in Folge sich ändernder Überlappung der einzelnen Pflugmodule untereinander die mit dem Pflug erzielbare Pflügbreite. Die Zuglinie 18 fällt mit der ersten Schwenkachse 13 zusammen, wobei die Anschlusseinheit 10 es ermöglicht, dass der einreihige Scheiben-Wendepflug von der in Figur 1a) gezeigten ersten Position beziehungsweise ersten Arbeitsposition 11 in die in Figur 1b) gezeigte zweite Position 12, d.h. zweite Arbeitsposition, geschwenkt wird. Dieses Schwenken erfolgt vorzugsweise in einem Bereich von 180°, sodass die erste Arbeitsposition 11 nach 180° Verschwenkung gegenüber der Anschlusseinheit 10 um die erste Schwenkachse 13 der gesamte Pflugmodulträger 3 mit allen dargestellten vier Pflugmodulen 2 relativ zur Anschlusseinheit 10 auf einer kreisförmigen Schwenkbahn verschwenkbar ist. Dieses Verschwenken stellt genaugenommen eine Spiegelung der Anordnung der Pflugmodule 2 mit dem Pflugmodulträger 3 in der ersten Position 11 auf die zweite Position 12 dar.

Bei einem einreihigen Scheiben-Wendepflug kann daher sowohl das Pflügen in einer ersten Richtung mit der einen Reihe von Scheiben des Wendepfluges gepflügt werden und nach erfolgter Schwenkung in die zweite Arbeitsposition 12 bei einer entsprechenden Pflügrichtung entgegengesetzt zu der vorherigen Pflügrichtung mit derselben einen Reihe von Scheiben des Wendepfluges gearbeitet werden. Es versteht sich, dass beim Schwenken der gesamten aus Pflugmodulträger 3 und Pflugmodulen 2 bestehenden Baueinheit aus einer Arbeitsposition in die andere Arbeitsposition die für ein effektives Pflügen notwendigen Anschnittwinkel 16 und Sturzwinkel 17 normalerweise nicht mehr für ein optimales Pflügen mit der Ausgangssituation übereinstimmen. Bei einer Einstellung des Anschnittwinkels 16 und des Sturzwinkels 17 in einer der beiden Arbeitspositionen können nach erfolgtem Verschwenken um 180° auf die gespiegelte Seite bezüglich der Anschlusseinheit 10 durch teilweises Zurückschwenken des Pflugmodulträgers 3 beziehungsweise der Schwenkeinheit 9 bezüglich des Pflugmodulträgers 3 durch Lösen der Fixierung der Schwenkeinheit an dem Pflugmodulträger eine solche Position des ersten Schneidelementes 4 und natürlich auch des zweiten Schneidelementes 8, erzeugt werden, dass selbst bei einer Pflügrichtung 180° entgegengesetzt zu der vorher durchgeführten Pflügrichtung die Winkel 16 und 17 wieder auf den ursprünglichen Wert für ein optimales Pflügen sozusagen hingetrimmt werden, ohne dass die beiden Schneidelemente 4, 8, d.h. erstes Schneidelement 4 und zweites Schneidelement 8 gesonderte Verstellmechanismen haben müssen.

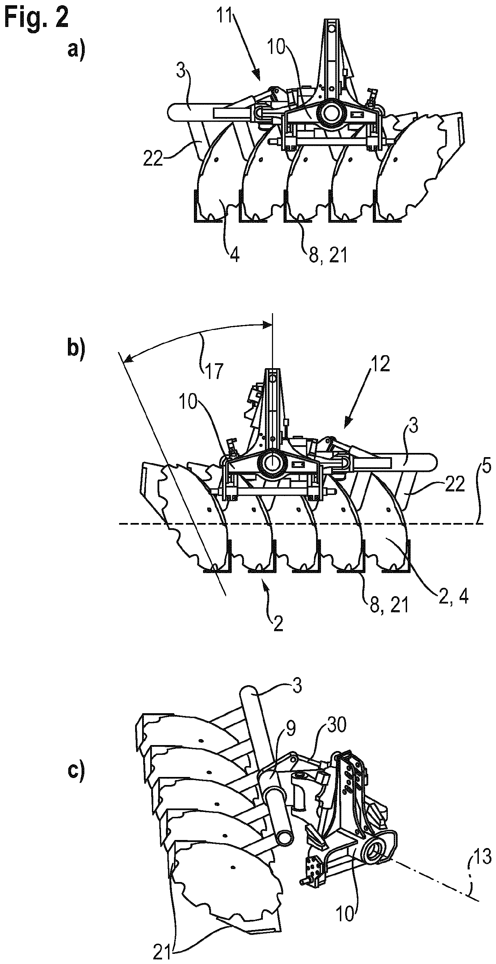

Der Kerngedanke gemäß der vorliegenden Erfindung besteht also darin, dass die aus Pflugmodulen 2 und Pflugmodulträger 3 bestehende Baueinheit mittels der Schwenkeinheit 9 doppelt verschwenkbar ist, sodass für beide Pflügrichtungen 6, 7 jeweils dieselben Anschnittwinkel 16 und Sturzwinkel 17 realisiert werden können. Der Anschnittwinkel 16 liegt bei diesem Ausführungsbeispiel bei 29,1°, der Sturzwinkel 17 bei 25,8° (siehe Figur 2b)).

Damit ist es möglich, auch mit einem einreihigen Pflug im Sinne eines Wendepfluges zu arbeiten, sodass der für einen Beetpflug übliche einreihige Aufbau auch für einen Wendepflug anwendbar ist. Dies ist mit erheblichen Kostensenkungen verbunden, da nicht die doppelte Anzahl von Modulen an einem Pflug angebracht werden muss, bei welchen bei Pflügrichtungsumkehr ein Wenden des Pfluges erfolgen muss, sodass beim Pflügen immer nur eine Reihe von Pflugmodulen 2 im Eingriff ist, während die andere "leer" mitgezogen wird. Dies führt auch wegen des erhöhten Materialeinsatzes zu erhöhtem Kraftstoffverbrauch. Der einreihige Scheiben-Wendepflug 1 gemäß der Erfindung bietet somit entscheidende Vorteile für die Energiebilanz wie auch für die ökologische Bilanz für das Pflügen.

Darüber hinaus ergibt sich daher für einen derartig aufgebauten erfindungsgemäßen Wendepflug außerdem die Möglichkeit, mit größeren Schneidtellern des ersten Schneidelementes zu arbeiten, was den Vorteil hat, dass gegebenenfalls beim Pflügen unterzupflügende Pflanzenreste nicht zu einem Verklemmen bzw. Verstopfen zwischen den einzelnen Modulen führt und auch eine insgesamt größere Breite und auch ggf. größere Tiefe beim Pflügen realisierbar sind. Die Flexibilität eines derartigen erfindungsgemäßen Scheiben-Wendepfluges wird dadurch sogar noch erhöht.

Der Grundgedanke der vorliegenden Erfindung besteht, wie ausgeführt, darin, dass eine doppelte Verschwenkbarkeit mittels der Schwenkeinheit 9 möglich ist, welche durch ein Verschwenken um die erste Schwenkachse 13, welche mit der Zuglinie 18 zusammenfällt, und um die Längsachse 15 des Pflugmodulträgers 3 im Sinne einer zweiten Schwenkrichtung 14 umfasst.

In Figur 2a) und b) sind die beiden Endpositionen der Arbeitspositionen 11, 12, d.h. der ersten Position 11 des Pflugmoduls 2 und der zweiten Position 12 des Pflugmoduls 2, für ein weiteres Ausführungsbeispiel mit einer Baueinheit gezeigt, welche aus fünf an dem Pflugmodulträger 3 angebrachten Pflugmodulen 2 besteht. Jedes Pflugmodul 2 weist ein erstes Schneidelement 4 in Form eines Schneidtellers und ein zweites Schneidelement 8 in Form eines Unterschneidemessers 21 auf. Die in Figur 2a) und Figur 2b) dargestellten Ansichten beziehen sich auf ein Bewegen, d.h. Pflügen mittels des Scheiben-Wendepfluges 1 in eine Richtung, welche aus der dargestellten Ebene herausweist. In Figur 2a) ist die erste Position 11 der Pflugmodule 2 gezeigt, wohingegen in Figur 2b) die zweite Position 12 des Pflugmoduls 2 dargestellt ist. Figur 2a) stellt also sozusagen für das Pflügen eine erste Pflügrichtung 6 im Sinne einer Hinbewegung dar, wohingegen Figur 2b) eine um 180° einer entgegengesetzt verlaufenden zweiten Pflügrichtung 7eine Einsatzstellung im Sinne einer Herbewegung, d.h. entgegengesetzten Bewegung, darstellt. Die beiden in Figur 2a) und Figur 2b) dargestellten Positionen sind die Positionen, in denen das Pflügen in der jeweiligen Pflügrichtung 6, 7 durchgeführt wird. Andeutungsweise sind in Figur 2b) ein Boden 5 und damit die zum Pflügen zu realisierende Eintauchtiefe angedeutet. Durch Verstellung des Anstellwinkels des Unterschneidemessers 21 in Pflügrichtung 6, 7 kann die Tiefe des Pflügens beeinflusst werden.

In Figur 2c) ist eine Zwischenposition zwischen den beiden Endpositionen, d.h. der ersten Position 11 und der zweiten Position 12 des Pflugmoduls 2, dargestellt. Wenn die spiegelsymmetrische Verschwenkung, welche eine erste Verschwenkung darstellt, aus der in Figur 2a) dargestellten ersten Position 11 in die in Figur 2b) dargestellte zweite Position 12 realisiert wird, so ist die Schwenkeinheit 9 fest mit dem Pflugmodulträger 3 verbunden, sodass die gesamte Baueinheit, bestehend aus Pflugmodulträger 3 und fünf Pflugmodulen 2 identischen Aufbaus auf einer Kreisbahn bezüglich der Anschlusseinheit 10 um die erste Schwenkachse 13, welche mit der Zuglinie 18 übereinstimmt, verschwenkt wird. Wenn von einer Arbeitsposition in die andere Arbeitsposition verschwenkt worden ist, wird im Bereich des Endes der ersten Verschwenkbewegung die Fixierung der Schwenkeinheit 9 an dem Pflugmodulträger 3 gelöst und eine zu der ersten Schwenkbewegung entgegengesetzte Rückwärtsbewegung realisiert, und zwar so lange, bis der Anschnittwinkel 16 (siehe Figur 1a)) und der Sturzwinkel 17 (siehe Figur 2b)) des ersten Schneidelements 4 mit dem Anschnittwinkel 16 und dem Sturzwinkel 17 übereinstimmen, welche in der Ausgangsposition für ein optimales Pflügen eingestellt worden sind. Das bedeutet, dass durch diese, eine zweite Verschwenkung darstellende Gegenverschwenkung gleiche Pflügbedingungen mit dem einreihigen Scheiben-Wendepflug 1 erreicht werden, ohne dass eine zweite Reihe an Pflugmodulen 2 zum Pflügen in die Arbeitsposition eingeschwenkt werden muss. Es wird vielmehr lediglich die einreihige Pflugmodulanordnung so geschwenkt und die entsprechenden Schneidelemente 4, 8 durch das Schwenken so eingestellt, dass für das Hinpflügen wie auch für das Rückpflügen gleiche Bedingungen vorhanden sind und mit ein und derselben Reihe des nur einreihig ausgebildeten Scheiben-Wendepflugs 1 gepflügt werden kann. Zum Ausführen der Gegenbewegung wird die Fixierung zwischen Pflugmodulträger 3 und Schwenkeinheit 9 gelöst und mittels einer Betätigungseinrichtung 30 ein Gegenverschwenken der Schwenkeinheit 9 bezüglich des Pflugmodulträgers 3 erzeugt. Diese Betätigungseinrichtung 30 ist vorzugsweise eine hydraulische Betätigungseinrichtung, kann jedoch auch als mechanische, elektromechanische oder elektromagnetische Betätigungseinrichtung ausgebildet sein.

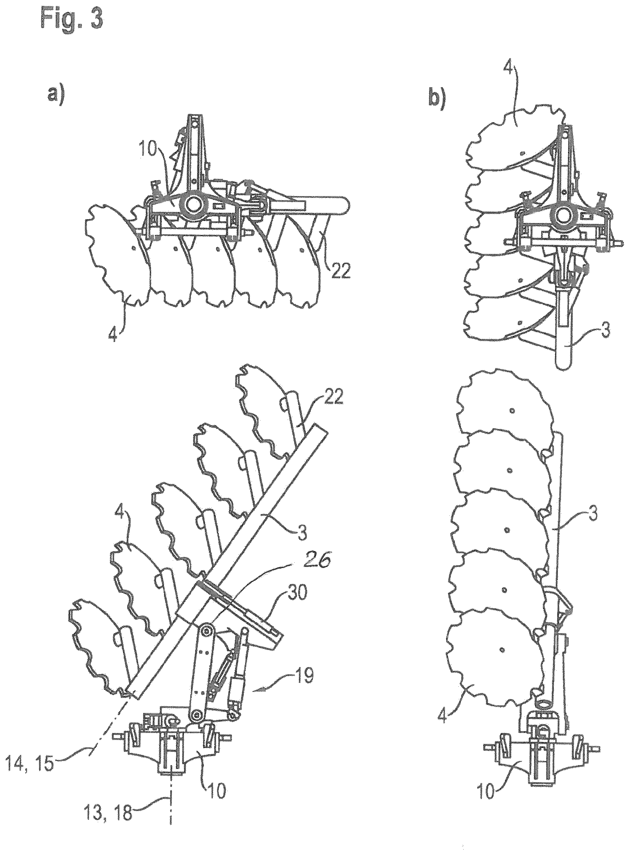

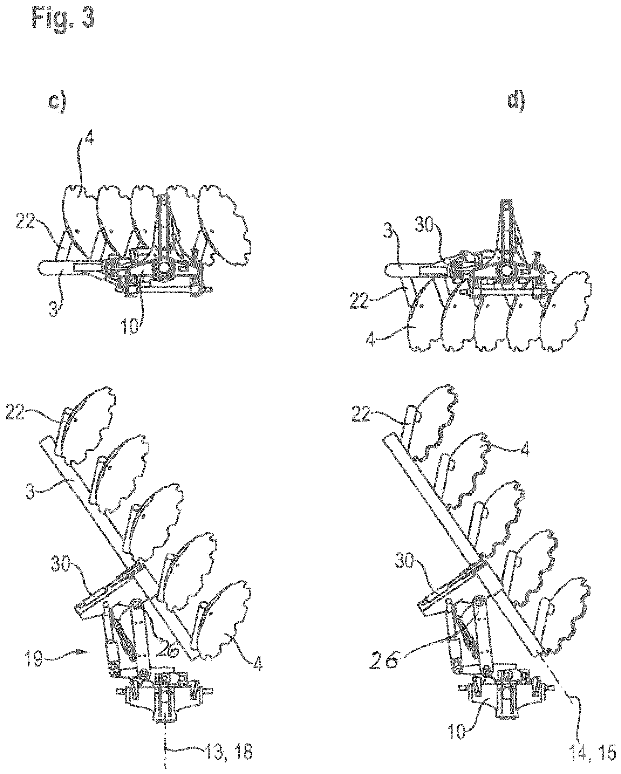

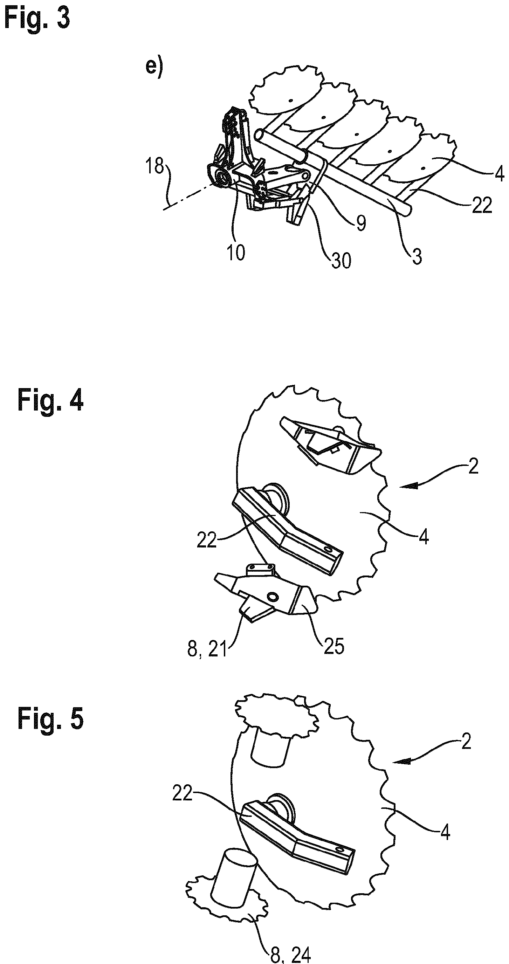

Figur 3 stellt das Ausführungsbeispiel mit fünf Pflugmodulen 2 in einer Reihe gemäß Figur 2 in vereinfachter Darstellung dar. Das zweite Schneidelement 8 ist jeweils weggelassen. Es sind jeweils eine Vorderansicht und eine Draufansicht gezeigt, um den jeweiligen Neigungswinkel der ersten Schneidelemente darzustellen. Die Vorderansicht ist dabei in Richtung der Zuglinie 18 gerichtet, welche mit der Schwenkachse 13 der Anschlusseinheit 10 identisch ist. Analog zu Figur 2 sind jeweils in Figur 3a) die erste Arbeitsposition 11 und in Figur 3d) die zweite Arbeitsposition 12 gezeigt. Die Arbeitspositionen 11, 12 sind jeweils die Positionen, in denen der erfindungsgemäße einreihige Scheiben-Wendepflug 1 pflügt. Aus den Figuren 3a) und 3d) ist ersichtlich, dass Anschnittwinkel 16 und Sturzwinkel 17 des ersten Schneidelementes 4 zueinander in den die Arbeitspositionen 11, 12 darstellenden Endpositionen eine gespiegelte Anordnung aufweisen, dem Grunde nach aber einen jeweils gleichen Winkel für Anschnitt und Sturz in beiden Arbeitspositionen 11, 12 aufweisen. Figuren 3b) und 3c) zeigen je eine Zwischenposition, nach 90° und nach nochmaligem 90°-Verschwenken. Die erste Schwenkung der Baueinheit aus Pflugmodulträger 3 und Pflugmodulen 2 erfolgt um die erste Schwenkachse 13, welche mit der Zuglinie 18 zusammenfällt. Dargestellt in Figur 3d) ist eine Schwenkung um zweimal 90°, d.h. 180°, es ist jedoch prinzipiell auch möglich und je nach Einsatzzweck durchaus auch vorteilhaft, einen Verschwenkungswinkel zwischen erster Arbeitsposition 11 und zweiter Arbeitsposition 12 von insgesamt weniger als 180° zu realisieren. Nach erfolgter erster Schwenkung um insgesamt 180°, welche nach Beendigung des Zuges in einer Pflügrichtung durchgeführt wird, erfolgt zeitlich nacheinander oder zumindest teilweise zeitlich parallel eine zweite Schwenkung zwischen Pflugmodulträger 3 und Schwenkeinheit 9 in entgegengesetzter Richtung zur ersten Schwenkung, und zwar um +/- 44°. Danach sind Anschnittwinkel 16 und Sturzwinkel 17 betragsmäßig wieder gleich groß wie für den ersten Zug, jedoch gespiegelt für den nachfolgenden Zug in der entgegengesetzten Pflügrichtung. Mittels einer zusätzlichen Schwenkachse 26 wird mittels des Parallelogrammgestänges ein zwischen der Zuglinie 18 des Antriebsfahrzeuges und dem Pflugmodulträger 3 ausgebildeter und die Pflügbreite definierender Winkel eingestellt.

Figur 3d) zeigt eine bezüglich der Arbeitsposition gemäß Figur 3a) gespiegelte Arbeitsposition, in welcher deutlich wird, wie die aus Pflugmodulträger 3 und Pflugmodulen 2 bestehende Baueinheit bezüglich der ersten Schwenkachse 13 und der zweiten Schwenkachse 14 (siehe Figur 1) aus der ersten Arbeitsposition 11 in die zweite Arbeitsposition 12 um ca. 180° einschließlich der Gegenschwenkung von 44° geschwenkt werden kann. In Figur 3e) wird eine Transportposition gezeigt, welche gewissermaßen eine gesonderte Zwischenposition zwischen der ersten 11 und der zweiten Arbeitsposition 12 ist.

In Figur 4 ist ein Teil eines Pflugmoduls 2 dargestellt, dessen erstes Schneidelement 4 als gewölbter und gezahnter Schneidteller dargestellt ist, mittels welchem die Seitenbereiche eines Erdbalkens geschnitten und das Wenden des herausgeschnittenen und zuvor an der Sohle vom sonstigen Erdreich getrennten Erdbalkens erfolgt und der Erdbalken in gewendeter Form wieder in der Furche ablegt wird. An der Rückseite der aktiven konkaven Innenseite des ersten Schneidelementes 4 ist der den tragenden Teil des Pfluges darstellende Grindel 22 ansatzweise gezeigt. Der vereinfachten Darstellung wegen ist das zweite Schneidelement 8, welches als Unterschneidemesser 21 ausgebildet ist, ebenfalls nur ansatzweise dargestellt. Es versteht sich, dass das zweite Schneidelement 8 ebenfalls am Grindel 22 befestigt ist. Das in Figur 4 dargestellte Pflugmodul 2 stellt ein weiteres Ausführungsbeispiel dar, bei welchem an dem zweiten Schneidelement 8 in Form des Unterschneidemessers 21 eine Nachlaufstabilisierung 25 in Form eines Anlagebleches befestigt ist, welche eine zusätzliche Ausrichtkomponente für die eingestellte Winkelstellung des Pflugmodulträgers 3 gewährleistet. Diese Nachlaufstabilisierung 25 trägt dazu bei, dass der im Sinne eines Variopfluges eingestellte Winkel zwischen der Längsachse 15 des Pflugmodulträgers 3 und der Zuglinie 18 beibehalten wird, sodass die gewünschte und eingestellte Pflugbreite letztendlich eingehalten werden kann.

In Figur 5 ist ein vereinfacht gezeigtes Pflugmodul 2 für den erfindungsgemäßen einreihigen Scheiben-Wendepfluges dargestellt. Das erste Schneidelement 4 ist in Richtung des zu schneidenden Erdbalkens als konkave Hohlscheibe mit gezähntem Umfang ausgebildet. An ihrer konvexen Rückseite ist die Hohlscheibe über einen entsprechenden Grindel 22 mit dem Pflugmodulträger 3 verbunden. Das erste Schneidelement 4 entspricht in seinem Aufbau und in seiner Anordnung den vorherigen Ausführungsbeispielen. Anstelle des zweiten Schneidelementes 8 ist jedoch ein scheibenförmiges zweites Schneidelement 8 in Form einer Bodenschneidscheibe 24 vorgesehen, welches den Sohlenbereich eines aus dem Boden 5 herauszuschneidenden Erdbalkens schneiden soll. Der grundsätzliche Aufbau dieses weiteren Ausführungsbeispiels ist ansonsten identisch zu dem insbesondere in den Figuren 2 und 3 beschriebenen Aufbau. Das bedeutet, dass der Pflugmodulträger 3 mit einer Schwenkeinheit 9 verbunden ist, welche über ein Parallelogrammgestänge 19 mit einer Anschlusseinheit 10 verbunden ist. Die Funktion der Grundkomponenten wurde in Verbindung mit der Beschreibung zu den Figuren 1 bis 3 erläutert und wird daher hier nicht wiederholt.

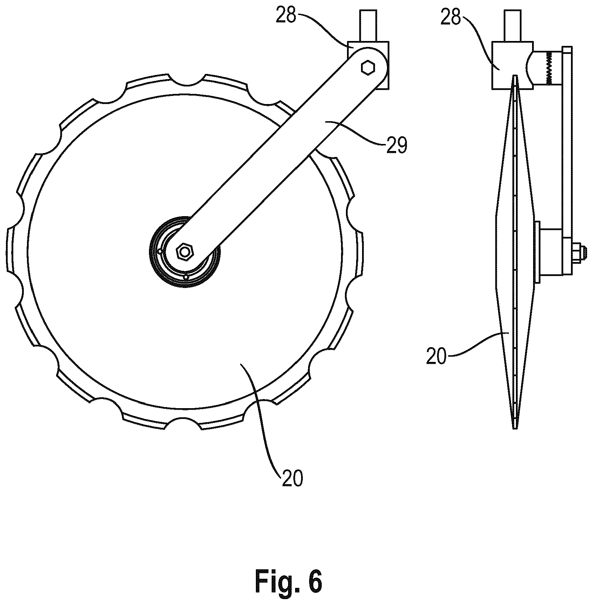

Figur 6 zeigt in prinzipieller Darstellung ein Führungssech 20, welches zumindest einem, beim erfindungsgemäßen Scheiben-Wendepflug 1 angeordneten Pflugmodul 2, beispielsweise in Pflügrichtung dem vordersten Pflugmodul 2 vorlaufend zugeordnet ist. Dieses Führungssech 20 dient dazu, nicht nur eine zusätzliche Richtungsstabilisierung für die Gewährleistung der eingestellten Pflügbreite zu schaffen, sondern dient auch dazu, die Seitenwand des aus der Erde herauszutrennenden und umzuwendenden Erdbalkens vorzuschneiden, damit für nachfolgende Pflugmodule 2 ein endgültiges Herausschneiden des Erdbalken aus einem festen, zu pflügenden Boden leichter erfolgt und damit auch die Belastung für die einzelnen Pflugmodule 2 geringer wird. Mit geringerer Belastung der Pflugmodule 2 reduziert sich auch die Zugkraft, welche zum Pflügen durch das Antriebsfahrzeug aufgebracht werden muss, sodass Lebensdauer und ökologische Gesichtspunkte weiter verbessert werden.

Das Führungssech 20 ist ballig ausgeführt, um ein sogenanntes "Verschneiden" zu verhindern. Die Aufhängung 29 des Führungsseches 20 in Verbindung mit der Verstellbarkeit des Führungswinkels, welchen man auch als Gierwinkel bezeichnen kann, wirkt richtungsstabilisierend, sodass die eingestellte Pflügbreite auch entgegen der Tendenz der Verringerung der Pflügbreite bei entsprechender Ausstellung der Längsachse 15 des Pflugmodulträgers 3 gegenüber der Zuglinie 18 wirkt. Um ein Schneiden des Seitenbereiches des Erdbalkens für die nachfolgenden Pflugmodule 2 zu erleichtern, ist das Führungssech 20 vorzugsweise doppeltballig ausgebildet, sodass der Schnittbereich für die Abtrennung des Seitenbereiches geweitet wird. Nachfolgende Pflugmodule 2, insbesondere dabei das erste Schneidelement 4, können so eine Belastungsreduzierung erfahren. Vorzugsweise wird die Winkeleinstellung, d.h. die Einstellung des Gierwinkels des Führungsseches 20, hydraulisch verstellt.

In Figur 6 ist das Führungssech 20 bezüglich seiner einstellbaren Aufhängung gezeigt. Dieses Führungssech 20 dient für einen im Wesentlichen senkrechten Vorschnitt des Erdbalkens, sodass dieses eine Vorschneidescheibe, welche auch als Varioscheibe bezeichnet wird, darstellt. Der Erdbalken wird bei den bekannten Verfahren wie auch bei dem erfindungsgemäßen Verfahren horizontal unterschnitten, was einerseits mit einem Unterschneidemesser 21, aber andererseits auch mit einer Bodenschneidescheibe 24 realisiert werden kann. Den vertikalen Schnitt zum Abtrennen des Erdbalkens von der Seite des festen Bodens übernimmt das als Hohlscheibe ausgebildete erste Schneidelement 4, welches den Erdbalken sogleich auch wendet und zur Seite ablegt.

Diese Doppelbeanspruchung an der Hohlscheibe führt oft zu größerer Überlastung der Lagerung mit Einleitung entsprechend hoher Kräfte in die Trägerelemente des Pfluges. Das Führungssech 20 schafft hierbei eine gewisse Abhilfe, da es den Erdbalken senkrecht vorschneidet. Dadurch ist der Erdbalken waagerecht und senkrecht vorgeschnitten macht die danach angeordnete Hohlscheibe des ersten Pflugmoduls 2 leichtzügiger und reduziert sogleich die Lagerkräfte. Dieses Führungssech 20 kann über ein Stellglied, insbesondere ein Hydraulikstellglied, betätigt werden, und zwar kann es orthogonal zur Pflügrichtung ausgelenkt werden, sodass gleichzeitig eine Arbeitsbreitenverstellung des Pfluges im Sinne der Variotechnik möglich ist.

### Bezugszeichenliste

- 1: Scheiben-Wendepflug
- 2: Pflugmodul
- 3: Pflugmodulträger
- 4: erstes Schneidelement/ Schneidteller
- 5: Boden
- 6: erste Pflügrichtung
- 7: zweite Pflügrichtung
- 8: zweites Schneidelement
- 9: Schwenkeinheit
- 10: Anschlusseinheit
- 11: erste Position Pflugmodul
- 12: zweite Position Pflugmodul
- 13: erste Schwenkachse
- 14: zweite Schwenkrichtung/ Schwenkachse, entgegengesetzt
- 15: Längsachse Pflugmodulträger
- 16: Anschnittwinkel
- 17: Sturzwinkel
- 18: Zuglinie
- 19: Parallelogrammgestänge
- 20: Führungssech
- 21: Unterschneidemesser
- 22: Grindel
- 23: Fahrtrichtung
- 24: Bodenschneidscheibe
- 25: Nachlaufstabilisierung
- 26: zusätzliche Schwenkachse
- 28: Verstellaktuator
- 29: Aufhängung Führungssech
- 30: Betätigungseinrichtung

## Patentansprüche

1. Scheiben-Wendepflug (1), welcher aufweist:
(a) zumindest ein rotierbares, als Schneidteller ausgebildetes erstes Schneidelement (4), mittels welchem beim Bewegen des Pfluges (1) durch zu pflügenden Boden (5) entlang einer ersten Pflügrichtung (6) und entlang einer dazu entgegengesetzten zweiten Pflügrichtung (7) ein Seitenbereich eines Erdbalkens des Bodens (5) geschnitten wird, und
(b) zumindest ein zweites, dem ersten Schneidelement (4) nachlaufendes Schneidelement (8), mittels welchem beim Bewegen des Pfluges (1) entlang der Pflügrichtungen (6, 7) ein Bodenbereich des Erdbalkens abschneidbar ist, wobei
(c) der Scheiben-Wendepflug (1) mit zumindest einem nur auf einer Seite eines Pflugmodulträgers (3) angeordneten Pflugmodul (2) einreihig ausgebildet ist,
(d) das erste und das zweite Schneidelement zu einem als fertig montierte Baueinheit auswechselbar ausgebildeten Pflugmodul (2), welches mit einem Pflugmodulträger (3) verbunden ist, zusammengefasst sind;
(e) der Pflugmodulträger (3) über Zwischenschaltung einer einen Pflugbaum ersetzenden Schwenkeinheit (9) mit einer Anschlusseinheit (10) zum Anschließen des Scheiben-Wendepflugs (1) an einem Antriebsfahrzeug verbunden ist, wobei die Anschlusseinheit (10) mittels eines Parallellogrammgestänges (19) an die Schwenkeinheit (9) angeschlossen ist, mittels welchem ein zwischen der Zuglinie (18) des Antriebsfahrzeuges und dem Pflugmodulträger (3) ausgebildeter und die Pflügbreite definierender Winkel mittels einer zusätzlichen, senkrecht zum Boden (5) gerichteten Schwenkachse (26) einstellbar ist;
(f) die Schwenkeinheit (9) derart doppeltschwenkend ausgebildet ist, dass beim Übergang von einer der beiden Pflügrichtungen (6,7) auf die andere der Pflugmodulträger (3) mit dem zumindest einen Pflugmodul (2) von dessen erster Position (11) zur gegenüberliegenden zweiten Position (12) bezüglich der Anschlusseinheit (10) schwenkbar und zusätzlich in der zweiten Position (12) in entgegengesetzter Schwenkrichtung relativ zur Längsachse (15) des Pflugmodulträgers (3) derart verschwenkbar ist und die Schneidelemente zueinander jeweils einen solchen Winkel aufweisen, dass ohne individuelle Einstellung der Schneidelemente Anschnittwinkel (16) und Sturzwinkel (17) des ersten Schneidelementes (4) identisch zu diesen Winkein (16, 17) vor dem Übergang von einer der beiden Pflügrichtungen (6, 7) auf die andere bleiben;
(g) das zweite Schneidelement zum Schneiden des Bodenbereiches des Erdbalkens als Unterschneidmesser oder scheibenförmig ausgebildet ist; und
(h) die Anschlusseinheit (10) eine im Wesentlichen in Zuglinie (18) verlaufende erste Schwenkachse (13), um welche der Scheiben-Wendepflug (1) verschwenkbar ist, und eine zweite Schwenkachse (14) aufweist, welche eine entgegen zur ersten Schwenkrichtung der ersten Schwenkachse (13) gerichtete zweite Schwenkrichtung um die Längsachse (15) des Pflugmodulträgers (3) ermöglicht und über welche die Anschlusseinheit (10) mit der Schwenkeinheit (9) verbunden ist.

2. Scheiben-Wendepflug (1) nach Anspruch 1, **dadurch gekennzeichnet, dass** vor dem zumindest einen Pflugmodul (2) ein Führungssech (20) angeordnet ist.

3. Scheiben-Wendepflug (1) nach Anspruch 2, **dadurch gekennzeichnet, dass** das Führungssech (20) bezüglich der Zuglinie (18) insbesondere hydraulisch ausschwenkbar ist.

4. Scheiben-Wendepflug (1) nach Anspruch 2 oder 3, **dadurch gekennzeichnet, dass** das Führungssech (20) beidseitig konvex ausgebildet ist.

5. Scheiben-Wendepflug (1) nach einem der Ansprüche 1 bis 4, **dadurch gekennzeichnet, dass** der Pflugmodulträger (3) einen zylindrischen Querschnitt aufweist.

6. Scheiben-Wendepflug (1) nach einem der Ansprüche 1 bis 5, **dadurch gekennzeichnet, dass** die Schwenkeinheit (9) zum Verschwenken des Pflugmoduls (2) gemeinsam mit dem Pflugmodulträger (3) aus dessen erster Position (11) in dessen zweite Position (12) am Pflugmodulträger (3) unverdrehbar fixiert ist und das Gegenverschwenken in der zweiten Position (12) in entgegengesetzter Richtung bei gelöster Fixierung erfolgt, wobei das Gegenschwenken in der zweiten Position (12) bis zum Erreichen eines zur ersten Position (11) identischen Sturz- (17) und Anschnittwinkels (16) des ersten Schneidelementes (4) erfolgt, wobei das Gegenverschwenken ohne Verschwenkung des Pflugmoduls (2) bezüglich seines Pflugmodulträgers (3) realisiert wird.

7. Scheiben-Wendepflug (1) nach einem der Ansprüche 1 bis 6, **dadurch gekennzeichnet, dass** das Verschwenken des zumindest einen Pflugmoduls (2) zusammen mit dem Pflugmodulträger (3) in einem Winkelbereich von 180° ± 44° erfolgt.

8. Scheiben-Wendepflug (1) nach einem der Ansprüche 1 bis 7, **dadurch gekennzeichnet, dass** das zweite Schneidelement (8) als Unterschneidmesser (21) ausgebildet ist.

## Claims

1. Disc reversible plow (1), which comprises:
(a) at least one rotatable first cutting element (4) in the form of a cutting disc, by means of which, when the plow (1) is moved through soil (5) to be plowed along a first plowing direction (6) and along a second plowing direction (7) opposite thereto, a side region of a soil bar of the soil (5) is cut, and
(b) at least one second cutting element (8) which follows the first cutting element (4) and by means of which, when the plow (1) is moved along the plowing directions (6, 7), a bottom region of the soil bar can be cut off, **characterized in that**
(c) the disc reversible plow (1) is designed with at least one plow module (2) arranged on only one side of a plow module carrier (3) in a single row,
(d) the first and second cutting elements are combined to form a plow module (2) which is designed to be replaceable as a fully assembled unit and which is connected to a plow module carrier (3);
(e) the plow module carrier (3) is connected to a connection unit (10) for connecting the disc reversible plow (1) to a drive vehicle via an interposed pivoting unit (9) which replaces a plow beam, the connection unit (10) being connected to the pivoting unit (9) by means of a parallelogram linkage (19), by means of which an angle formed between the traction line (18) of the drive vehicle and the plow module carrier (3) and defining the plowing width is adjustable by means of an additional pivot axis (26) directed perpendicular to the ground (5);
(f) the pivoting unit (9) is designed to pivot twice in such a way that during the transition from one of the two plowing directions (6, 7) to the other one, the plow module carrier (3) with the at least one plow module (2) is pivotable from its first position (11) to the opposite second position (12) with respect to the connection unit (10) and is additionally pivotable in the second position (12) in the opposite pivoting direction relative to the longitudinal axis (15) of the plow module carrier (3) in such a way and the cutting elements each having such an angle to one another, that without individual adjustment of the cutting elements, the cutting angle (16) and camber angle (17) of the first cutting element (4) remain identical to these angles (16, 17) before the transition from one of the two plowing directions (6, 7) to the other;
(g) the second cutting element for cutting the bottom region of the soil bar is designed as an undercutting knife or in the form of a disc; and
(h) the connecting unit (10) comprises a first pivot axis (13) which runs essentially in the line of traction (18) and about which the disc reversible plow (1) can be pivoted, and a second pivot axis (14) which enables a second pivoting direction about the longitudinal axis (15) of the plow module carrier (3) which is directed counter to the first pivoting direction of the first pivot axis (13) and via which the connecting unit (10) is connected to the pivoting unit (9).

2. Disc reversible plow (1) according to claim 1, **characterized in that** a guide coulter (20) is arranged in front of the at least one plow module (2).

3. Disc reversible plow (1) according to claim 2, **characterized in that** the guide coulter (20) can be swivelled out, in particular hydraulically, of the traction line (18).

4. Disc reversible plow (1) according to claim 2 or 3, **characterized in that** the guide coulter (20) is convex on both sides.

5. Disc reversible plow (1) according to one of claims 1 to 4, **characterized in that** the plough module carrier (3) has a cylindrical cross-section.

6. Disc reversible plow (1) according to one of claims 1 to 5, **characterized in that** the pivoting unit (9) for pivoting the plow module (2) together with the plow module carrier (3) from its first position (11) into its second position (12) is fixed non-rotatably on the plow module carrier (3) and the counter-pivoting in the second position (12) takes place in the opposite direction when the fixing is released, wherein the counter-pivoting in the second position (12) takes place until a camber (17) and lead angle (16) of the first cutting element (4) identical to the first position (11) is reached, wherein the counter-pivoting is realized without pivoting the plow module (2) with respect to its plow module carrier (3).

7. Disc reversible plow (1) according to one of claims 1 to 6, **characterized in that** the pivoting of the at least one plow module (2) together with the plow module carrier (3) takes place in an angular range of 180° ± 44°.

8. Disc reversible plow (1) according to one of claims 1 to 7, **characterized in that** the second cutting element (8) is designed as an undercutting blade (21).

## Revendications

1. Charrue réversible à disques (1), qui comporte:
(a) au moins un premier élément de coupe rotatif (4), conçu comme une plaque de coupe, au moyen duquel, lorsque la charrue (1) est déplacée à travers le sol (5) à labourer, une zone latérale d'une bande de labour du sol (5) est coupée suivant un premier sens de labour (6) et suivant un deuxième sens de labour opposé (7), et
(b) au moins un deuxième élément de coupe (8) qui suit le premier élément de coupe (4) et au moyen duquel une zone de sol de la bande de labour peut être découpée lorsque la charrue (1) est déplacée suivant les sens de labour (6, 7),
(c) la charrue réversible à disques (1) étant conçue en une seule rangée avec au moins un module de charrue (2) disposé uniquement sur un côté d'un support de module de charrue (3).
(d) les premier et deuxième éléments de coupe étant combinés pour former un module de charrue (2) qui est conçu pour être interchangeable en tant qu'unité structurelle entièrement assemblée et qui est relié à un support de module de charrue (3) ;
(e) le support de module de charrue (3) étant relié à une unité de raccordement (10), par interposition d'une unité pivotante (9) remplaçant un arbre de charrue, afin de relier la charrue réversible à disques (1) à un véhicule d'entraînement, l'unité de raccordement (10) étant raccordée à l'unité pivotante (9) au moyen d'une tringlerie à parallélogramme (19) au moyen de laquelle un angle formé entre la ligne de traction (18) du véhicule d'entraînement et le support de module de charrue (3) et définissant la largeur de labour peut être réglé au moyen d'un axe de pivotement supplémentaire (26) dirigé perpendiculairement au sol (5) ;
(f) l'unité pivotante (9) étant conçue pour être doublement pivotante de manière à ce que, lors du passage de l'un des deux sens de labour (6,7) à l'autre, le support de module de labour (3) puisse pivoter avec l'au moins un module de charrue (2) de sa première position (11) à la deuxième position opposée (12) par rapport à l'unité de raccordement (10) et puisse en outre pivoter dans la deuxième position (12) dans le sens de pivotement opposé par rapport à l'axe longitudinal (15) du support de module de charrue (3) et les éléments de coupe formant chacun entre eux un angle tel que, sans réglage individuel des éléments de coupe, l'angle d'attaque (16) et l'angle de carrossage (17) du premier élément de coupe (4) restent identiques à ces angles (16, 17) avant le passage de l'un des deux sens de labour (6, 7) à l'autre ;
(g) le deuxième élément de coupe destiné à couper la zone de sol de la bande de labour étant conçu comme un couteau de coupe inférieure ou en forme de disque ; et
(h) l'unité de raccordement (10) comportant un premier axe de pivotement (13) qui s'étend sensiblement dans la ligne de traction (18) et autour duquel la charrue réversible à disques (1) peut pivoter, et un deuxième axe de pivotement (14) qui permet un deuxième sens de pivotement autour de l'axe longitudinal (15) du support de module de charrue (3), qui est opposé au premier sens de pivotement du premier axe de pivotement (13), et par le biais duquel l'unité de raccordement (10) est reliée à l'unité de pivotement (9).

2. Charrue réversible à disques (1) selon la revendication 1, **caractérisée en ce qu'**un coutre de guidage (20) est disposé devant l'au moins un module de charrue (2).

3. Charrue réversible à disques (1) selon la revendication 2, **caractérisée en ce que** le coutre de guidage (20) peut être pivoté notamment hydrauliquement par rapport à la ligne de traction (18).

4. Charrue réversible à disques (1) selon la revendication 2 ou 3, **caractérisée en ce que** le coutre de guidage (20) est convexe des deux côtés.

5. Charrue réversible à disques (1) selon l'une des revendications 1 à 4, **caractérisée** en que le support de module de charrue (3) a une section transversale cylindrique.

6. Charrue réversible à disques (1) selon l'une des revendications 1 à 5, **caractérisée** en que l'unité de pivotement (9), destinée à faire pivoter le module de charrue (2) conjointement avec le support de module de charrue (3) de sa première position (11) à sa deuxième position (12), est fixée sans pouvoir tourner au support de module de charrue (3) et le pivotement en sens inverse est effectué dans la deuxième position (12) en sens inverse lorsque la fixation est libérée, le pivotement en sens inverse étant effectué dans la deuxième position (12) jusqu'à obtenir un angle de carrossage (17) et un angle d'attaque (16) du premier élément de coupe (4) identique à ceux de la première position (11), le pivotement en sens inverse étant effectué sans faire pivoter le module de charrue (2) par rapport à son support de module de charrue (3).

7. Charrue réversible à disques (1) selon l'une des revendications 1 à 6, **caractérisée en ce que** le pivotement de l'au moins un module de charrue (2) conjointement avec le support de module de charrue (3) est effectué dans une plage angulaire de 180° ± 44°.

8. Charrue réversible à disques (1) selon l'une des revendications 1 à 7, **caractérisée en ce que** le deuxième élément de coupe (8) est conçu comme un couteau de coupe inférieure (21).
